# EUROPEAN PATENT APPLICATION

(11) **EP 2 711 240 A1**
(43) Date of publication of application: **26.03.2014**
(21) Application number: 12785212.7
(22) Date of filing: 16.05.2012
(51) Int. Cl.: B60N 2/16, A47C 7/02

(54) **SEAT LIFTER**

(30) Priority: 19.05.2011 JP 2011112048; 30.01.2012 JP 2012016518
(71) Applicant: Shiroki Corporation, Fujisawa-shi, Kanagawa 252-0811 (JP)
(72) Inventor: FUJIOKA, Hidehiko, Fujisawa-shi, Kanagawa 252-0811 (JP); ITO, Toshiharu, Fujisawa-shi, Kanagawa 252-0811 (JP)
(74) Representative: Nordmeyer, Philipp Werner
(86) International application number: PCT/JP2012/062523
(87) International publication number: WO 2012/157678

(57) **Abstract**

[Problem] The present invention relates to a seat lifter capable of changing the height or inclination of an inner side lower arm and outer side lower arm of a seat cushion and addresses the problem of providing a seat lifter wherein the welding position of a rod to a link remains fixed. [Solution] Links (link members) (19, 191, 61, 161) are provided with shaft sections (31a, 119b, 61a, 161b) having through holes and are rotatably held on the outer peripheral surfaces of the shaft sections (31a, 119b, 61a, 161b). Rods (53, 69) are inserted through the through holes of the links (19, 191, 61, 161) and welded.

## Description

### Technical Field

The present invention relates to a seat lifter changing height or inclination of a seat cushion using links.

### Background Art

In a seat lifter changing height or inclination of a seat cushion using links, there is a seat lifter that the movement of a link provided at one side (for example, outer-side) of a width direction of a seat is transmitted, via a rod, to a link provided at the other side (for example, inner side) thereof.

As a connection structure of the rod and the link, there is a structure, in which an end surface of the rod contacts the link and the abutment portion therebetween is fixed by welding (for example, see Patent Document 1).

In this structure, the dimension in a width direction of the seat becomes uneven due to variations in dimensional accuracy and assembly accuracy of mechanical parts of the seat, and therefore the end surface of the rod may not be welded to the link.

Consequently, one structure has been proposed, in which a pin that is rotatably supporting a link is fixed to the link and fitted to an inner peripheral portion of the rod, and then the pin and the rod are fixed by welding (for example, see Patent Document 2).

According to this structure, the variations in dimensional accuracy and assembly accuracy of mechanical parts of the seat can be absorbed by a length of the pin, and therefore it is possible to weld the rod and the link.

Citation List

### Patent Literature

Patent Document 1: JP-A-2002-283900 (FIG. 2)
Patent Document 2: JP-A-2010-274691 (FIG. 2)

### Summary of Invention

### Technical Problem

However, in the invention disclosed in Patent Document 2, the welded position of the rod and the pin is not fixed due to the variations in dimensional accuracy and assembly accuracy of mechanical parts of the seat. Accordingly, there is a problem that it is difficult to perform welding using a jig.

The present invention has been made to solve the above-described problems, and an object thereof is to provide a seat lifter in which a welded position of a rod is fixed.

### Solution to Problem

In order to solve at least one of the above-described problems, a seat lifter according to one aspect of the present invention is a seat lifter that is capable of changing height or inclination of an inner-side lower arm and an outer-side lower arm of a seat cushion. The seat lifter includes a first link member provided at one side of a width direction of a seat, a second link member provided at the other side of the width direction of the seat and a rod having one end attached to the first link member and the other end attached to the second link member. At least one of the link members includes a shaft portion with a hole and is rotatably held on an outer peripheral surface of the shaft portion. The rod is welded in a state of being inserted into the hole of the link member.

Other features of the present invention will be more apparent from modes for carrying out the present invention and the accompanying drawings, as described below.

Furthermore, "the link member" as used herein is not limited to an elongated rod-like member itself that is generally referred to as a link, but includes a component shape in which other components are fixed to an elongated rod-like member.

### Effects of Invention

According to the present invention, since at least one of the link members includes the shaft portion with the hole and is rotatably held on the outer peripheral surface of the shaft portion and the rod is welded in a state of being inserted into the hole of the link member, the welded position of the rod is fixed. Further, since the rod is inserted into a rod hole, it is possible to absorb the variation in an axial dimension of the rod.

Other effects of the present invention will be more apparent from modes for carrying out the present invention and the accompanying drawings, as described below.

### Brief Description of Drawings

FIG. 1 is a perspective view illustrating a main portion of a seat lifter according to an illustrative embodiment.
FIG. 2 is a view as seen from a direction of an arrow II in FIG. 1.
FIG. 3 is a sectional view taken along a cutting line III-III in FIG. 2.
FIG. 4 is a sectional view taken along a cutting line IV-IV in FIG. 2.
FIG. 5 is a view explaining the inventive portion of a second embodiment, corresponding to FIG. 3 of the first embodiment.
FIG. 6 is a view explaining the inventive portion of the second embodiment, corresponding to FIG. 4 of the first embodiment.
FIG. 7 is a view explaining a bush of a third embodiment.

### Description of Embodiments

### <First Embodiment>

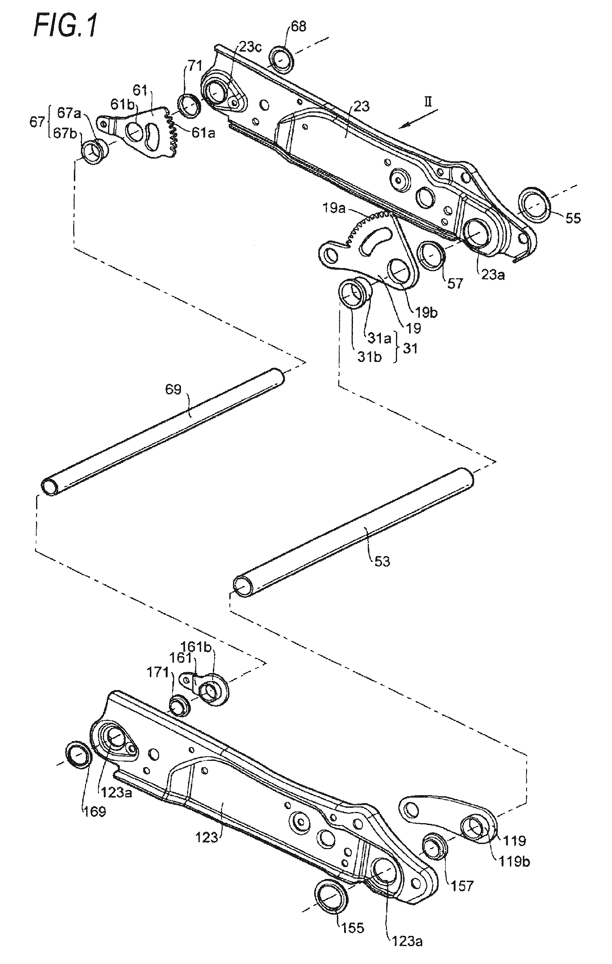

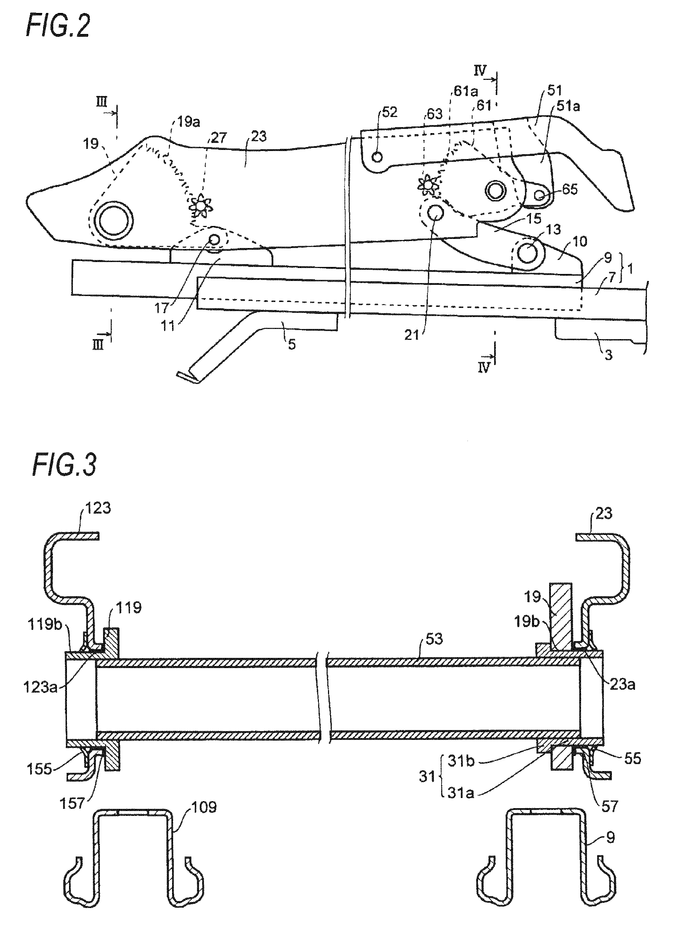

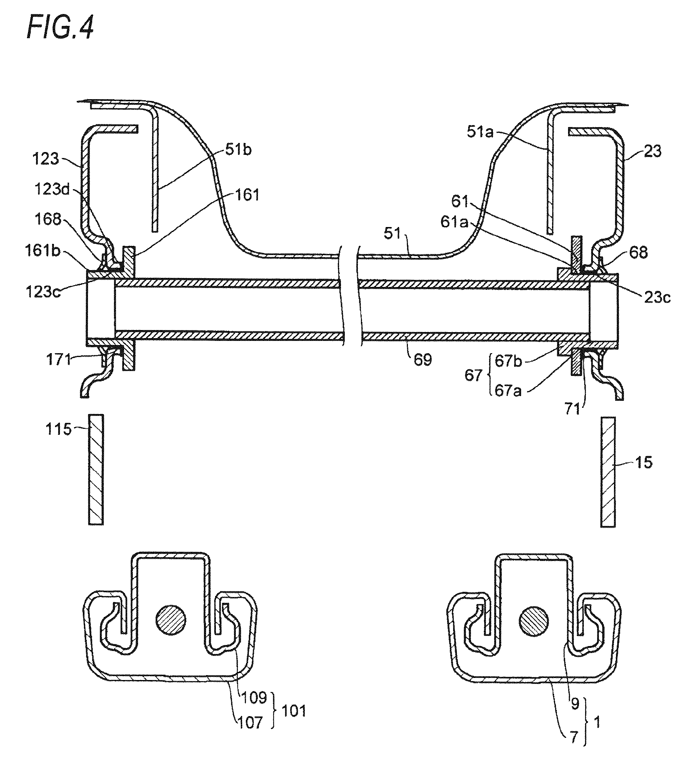

Hereinafter, a first embodiment of the present invention will be described with reference to the accompanying drawings. FIG. 1 is a perspective view illustrating a main portion of a seat lifter according to the first embodiment, FIG. 2 is a view as seen from a direction (outer-side) of an arrow II in FIG. 1, FIG. 3 is a sectional view taken along a cutting line III-III in FIG. 2, and FIG. 4 is a sectional view taken along a cutting line IV-IV in FIG. 2.

First, an overall configuration of a seat including a seat lifter according to an illustrative embodiment is described with reference to FIG. 2. As shown in FIG. 2, an outer-side seat track 1 includes a lower rail 7 provided to a floor viabrackets 3, 5 and an upper rail 9 that is engaged with the lower rail 7 to be movable relative to the lower rail 7.

A pair of (outer-side and inner-side) seat tracks 1 is provided to the floor. The seat track shown in FIG. 2 is an outer-side seat track. As shown in FIG. 3 and FIG. 4, an inner-side seat track 101 includes a lower rail 107 and an upper rail 109 that is engaged with the lower rail 107 to be movable relative to the lower rail 107.

### (Seat Lifter Changing Height of Seat Cushion)

Returning to FIG. 2, a front bracket 10 is provided at a front-side upper portion of the upper rail 9, and a rear bracket 11 is provided at a rear-side upper portion thereof. One end side of a front link 15 is rotatably attached to the front bracket 10 by using a pin 13. One end side of a rear link 19 is rotatably attached to the rear bracket 11 by using a pin 17. The other end side of the front link 15 is rotatably attached to a front portion of an outer-side lower arm 23 of the seat cushion by using a pin 21. The other end side of the rear link 19 is rotatably attached to a rear portion of the lower arm 23 of the seat cushion by a mounting structure as described below. Accordingly, a four-bar linkage rotation mechanism is configured by the upper rail 9, the front link 15, the lower arm 23 and the rear link 19.

Similarly, an inner-side lower arm 123 (see FIG. 1) of the seat cushion is also provided to the inner-side seat track 101 via a front link (see FIG. 4) and a rear link 119 (see FIG. 1), and a four-bar linkage rotation mechanism is configured by the inner-side upper rail 109, the front link, the lower arm 123 and the rear link 119.

The outer-side rear link 19 is formed with a sector gear 19a centered about a rotation center of a side of the lower arm 23. The lower arm 23 is provided with a pinion 27 that is screwed to the sector gear 19a. The pinion 27 is rotationally driven by a motor (not shown) provided in the lower arm 23.

Now, a mounting structure of the rear link 19 and the rear link 119 is described with reference to FIG. 1 and FIG. 3. The rear link 19 is formed with a through-hole 19b centered about a rotation center thereof. Additionally, the lower arm 23 is formed with a hole 23a that has a diameter slightly greater than that of the through-hole 19b of the rear link 19.

A bush 31 is attached to the through-hole 19b of the rear link 19 and is configured by a cylindrical portion (shaft portion) 31a and a collar portion 31b. The cylindrical portion 31a is inserted into the through-hole 19b and both ends thereof are formed as an open face. The collar portion 31b is formed at an outer peripheral surface of the cylindrical portion 31a and welded to an edge of the through-hole 19b of the rear link 19. In the cylindrical portion 31a of the bush 31, an outer peripheral surface of the protruding part protruded from the through-hole 19b of the rear link 19 is fitted to the hole 23a of the lower arm 23, and therefore the rear link 19 is rotatably held. One end side of a rod 53 is inserted into a through-hole of the bush 31 and an outer peripheral surface of the rod 53 and the collar portion 31b (link member) of the bush 31 are welded to each other. In the cylindrical portion 31a of the bush 31, an outer peripheral surface of the protruding part protruded from the hole 23a of the lower arm 23 is mounted with a push nut 55 that can contact an outer surface of the lower arm 23. Additionally, in the present embodiment, a bush 57 made of a low-friction material is disposed between an inner peripheral surface of the hole 23a of the lower arm 23 and an outer peripheral surface of the bush 31.

The rear link 119 is formed integrally with a cylindrical portion (shaft portion) 119b by a burring operation.

Meanwhile, the lower arm 123 is formed with a hole 123a that has a diameter slightly greater than that of the cylindrical portion 119b of the rear link 119.

Then, the cylindrical portion 119b of the rear link 119 is inserted into the hole 123a of the lower arm 123, and therefore the rear link 119 is rotatably held. The other end side of the rod 53 is inserted into a through-hole of the cylindrical portion 119b of the rear link 119, and an outer peripheral surface of the rod 53 and the rear link 119 are welded to each other. In the cylindrical portion 119b of the rear link 119, an outer peripheral surface of the protruding part protruded from the hole 123a of the lower arm 123 is mounted with a push nut 155 that can contact an outer surface of the lower arm 123. Additionally, in the present embodiment, a bush 157 made of a low-friction material is disposed between an inner peripheral surface of the hole 123a of the lower arm 123 and an outer peripheral surface of the cylindrical portion 119b of the rear link 119.

Accordingly, the rotation of the rear link 19 is transmitted to the rear link 119 via the rod 53. Consequently, as the pinion 27 is rotated and the rear link 19 is rotated, the rear link 119 is also rotated via the rod 53. Therefore, the lower arms 23, 123 are raised or lowered relative to the seat track 1.

### (Seat Lifter changing Inclination of Seat Cushion)

Returning to FIG. 2, a tilt pan 51 is disposed at the front-side upper portions of the lower arm 23 and the lower arm 123 such that the tilt pan 51 bridges the lower arm 23 and the lower arm 123. A base portion of the tilt pan 51 is rotatably attached to the lower arm 23 by using a pin 52 and rotatably attached to the lower arm 123 by using a pin (not shown).

Further, arm portions 51a, 51b (see FIG. 4) are provided at an intermediate portion of the tilt pan 51 with extending toward the seat tracks 1, 101.

A tilt link 61 is rotatably attached to a front portion of the lower arm 23. One rotation end side of the tilt link 61 is formed with a sector gear 61a centered about a rotation center thereof. The lower arm 23 is provided with a pinion 63 that is screwed to the sector gear 61a. The pinion 63 is rotationally driven by a motor (not shown) provided in the lower arm 23. A pin 65, which is fitted to the arm portion 51a of the tilt pan 51, is provided in the other rotation end side of the tilt link 61.

As shown in FIG. 1, a tilt link 161 is rotatably attached to a front portion of the lower arm 123. A pin (not shown), which is fitted to the arm portion 51b of the tilt pan 51, is provided in the other rotation end side of the tilt link 161.

Further, a mechanism for absorbing the difference between the rotation trajectory of the tilt links and the rotation trajectory of the tilt pan is provided to the tilt pan 51, the tilt link 61 and the tilt link 161.

Now, a mounting structure of the tilt link 61 and the tilt link 161 is described with reference to FIG. 1 and FIG. 4. The tilt link 61 is formed with a through-hole 61b centered about a rotation center thereof. Further, the lower arm 23 is formed with a hole 23c that has a diameter slightly greater than that of the through-hole 61b of the tilt link 61.

A bush 67 is attached to the through-hole 61b of the tilt link 61 and is configured by a cylindrical portion (shaft portion) 67a and a collar portion 67b. The cylindrical portion 67a is inserted into the through-hole 61b and both ends thereof are formed as an open face. The collar portion 67b is formed at an outer peripheral surface of the cylindrical portion 67a and welded to an edge of the through-hole 61b of the tilt link 61. In the cylindrical portion 67a of the bush 67, an outer peripheral surface of the protruding part protruded from the through-hole 61b of the tilt link 61 is fitted to the hole 23c of the lower arm 23 and therefore the tilt link 61 is rotatably held. One end side of a rod 69 is inserted into a through-hole of the bush 67 and an outer peripheral surface of the rod 69, and the collar portion 67b (link member) of the bush 67 are welded to each other. In the cylindrical portion 67a of the bush 67, an outer peripheral surface of the protruding part protruded from the hole 23c of the lower arm 23 is mounted with a push nut 68 that can contact an outer surface of the lower arm 23. Additionally, in the present embodiment, a bush 71 made of a low-friction material is disposed between an inner peripheral surface of the hole 23c of the lower arm 23 and an outer peripheral surface of the bush 67.

The tilt link 161 is formed integrally with a cylindrical portion 161b by a burring operation.

Meanwhile, the lower arm 123 is formed with a hole 123c that has a diameter slightly greater than that of the cylindrical portion 161b of the tilt link 161.

Then, the cylindrical portion 161b of the tilt link 161 is inserted into the hole 123c of the lower arm 123, and therefore the tilt link 161 is rotatably held. The other end side of the rod 69 is inserted into a through-hole of the cylindrical portion 161b of the tilt link 161, and an outer peripheral surface of the rod 69 and the tilt link 161 are welded to each other. In the cylindrical portion 161b of the tilt link 161, an outer peripheral surface of the protruding part protruded from the hole 123c of the lower arm 123 is mounted with a push nut 168 that can contact an outer surface of the lower arm 123. Additionally, in the present embodiment, a bush 171 made of a low-friction material is disposed between an inner peripheral surface of the hole 123c of the lower arm 123 and an outer peripheral surface of the cylindrical portion 161b of the tilt link 161.

Accordingly, the rotation of the tilt link 61 is transmitted to the tilt link 161 via the rod 69. Consequently, as the pinion 63 is rotated and the tilt link 61 is rotated, the tilt link 161 is also rotated via the rod 69. Therefore, a rotation end side of the tilt pan 51 is raised and lowered about the pin 52 of the lower arm 23 side, and a pin (not shown) of the lower arm 123 side, so that a front portion of the seat cushion is inclined.

According to the above configurations, the following effects will be obtained.
(1) In both the seat lifter changing the height of the seat cushion and the seat lifter changing the inclination of the seat cushion, the rod 53 and the rod 69 are inserted into the through-holes of the cylindrical portions (shaft portions) of the link member. Since the outer peripheral surfaces of the rod 53 and the rod 69 and the link member are welded to each other, so that the welded positions of the rod 53 and the rod 69 are fixed.
   Further, since the rod 53 and the rod 69 are inserted into the through-holes of the cylindrical portions of the link member, it is possible to absorb the variation in an axial dimension of the rod 53 and the rod 69.
(2) Since the rear link 119 is formed integrally with the cylindrical portion 119b, it is possible to reduce the number of parts and it is possible to stably hold the rear link 119 and the rod 53.
   Since the tilt link 161 is formed integrally with the cylindrical portion 161b, it is possible to reduce the number of parts and it is possible to stably hold the tilt link 161 and the rod 69.
(3) Since the cylindrical portion 119b of the rear link 119 is formed by a burring operation, manufacturing is simple. Similarly, since the cylindrical portion 161b of the tilt link 161 is also formed by a burring operation, manufacturing is simple.
(4) The rear link 19 having the sector gear 19a formed thereon and the tilt link 61 having the sector gear 61a formed thereon are subjected to a process of increasing the hardness by quenching. As the quenching is performed, a peripheral surface of the shaft portion is hardened, and therefore an inner peripheral side of the push nut does not bite into the shaft portion. Consequently, the push nut does not perform a push nut function. However, in the present embodiment, since the bush 31 and the bush 67 are interposed, the cylindrical portion 31a and the cylindrical portion 67a that are not hardened can be formed in the rear link 19 and the tilt link 161. In addition, it is possible to cause the welded positions of the rod 53 and the rod 69 to be fixed and it is also possible to absorb the variation in an axial dimension of the rod 53 and the rod 69.

The present invention is not limited to the above-described embodiments. Although the bush 31 and the bush 67 respectively include the collar portion 31b and the collar portion 67b in the above-described embodiment, the collar portion 31b and the collar portion 67b may be omitted.

Further, although a cylindrical portion is formed integrally in one side of the links and a cylindrical portion is formed in the bush that is fixed to the other side of the links in the present embodiment, the cylindrical portions may be formed integrally in both links without using the bush. In addition, both of the links may be a link that includes a bush having a cylindrical portion formed therein without forming the cylindrical portions integrally in the links.

Further, in the seat lifter of the above-described embodiment, the link is rotationally driven by rotationally driving a pinion that is meshed with the sector gear formed on the link. However, in addition to this configuration, the seat lifter may include a fixing nut member, which is only allowed to rotate and a threaded bar, which is screwed to the fixing nut member and has an end portion rotatably attached to the link. Therefore, the link may be rotated by rotating the fixing nut member to advance and retreat the threaded bar.

Further, although the rear link 19 is rotated in the mechanism changing the height of the seat cushion in the above-described embodiment, either one of the front link and the rear link to configure the four-bar linkage rotation mechanism may be rotated.

Furthermore, although the holes into which the rod 53 and the rod 69 are inserted are through-holes in the above-described embodiment, the holes may be blind holes having a sufficient depth.

### <Second Embodiment>

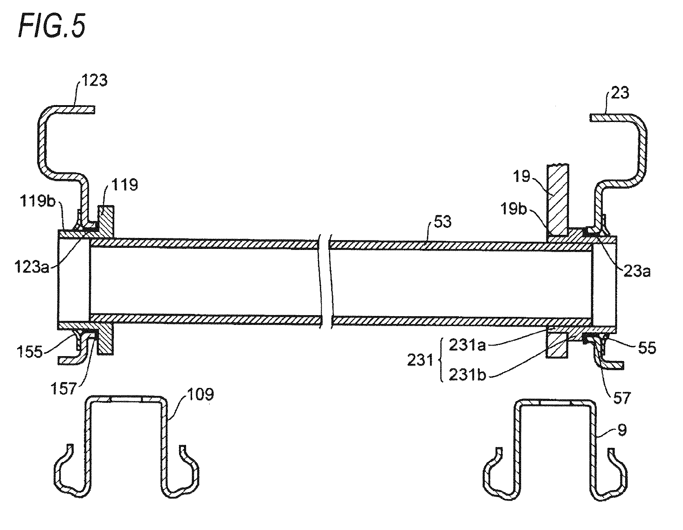

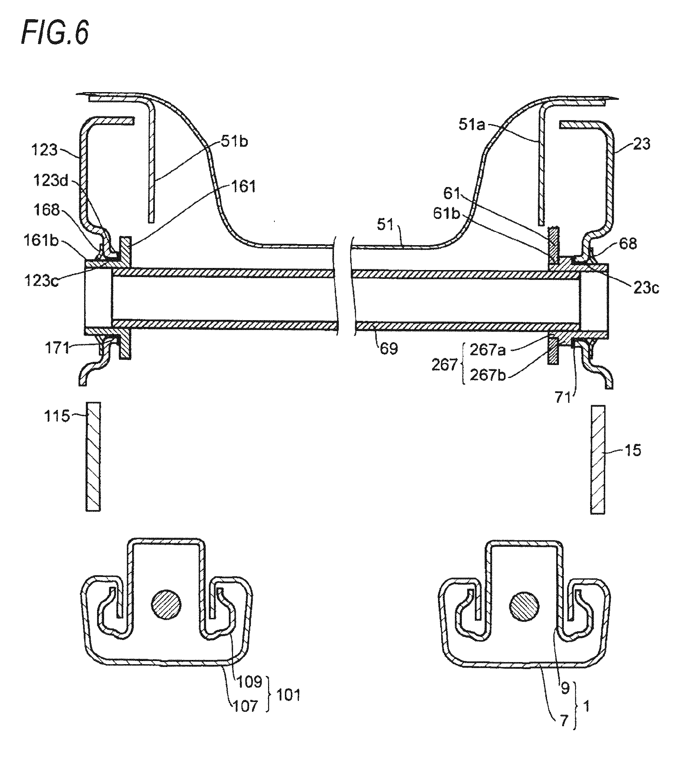

A second embodiment is described with reference to FIG. 5 and FIG. 6. FIG. 5 is a view explaining the inventive portion of the second embodiment, and it is corresponding to FIG. 3 of the first embodiment. FIG. 6 is a view explaining the inventive portion of the second embodiment, and it is corresponding to FIG. 4 of the first embodiment.

The present embodiment is the same as the first embodiment except for the shape of the bush. Accordingly, the same or similar element will be denoted by the same reference numeral as that of the first embodiment and a duplicated description thereof will be omitted.

First, as shown in FIG. 5, a bush 231 is attached to the through-hole 19b of the rear link 19 and is configured by a cylindrical portion (shaft portion) 231a and a collar portion 231b. The cylindrical portion 231a is inserted into the through-hole 19b and both ends thereof are formed as an open face. The collar portion 231b is formed at an outer peripheral surface of the cylindrical portion 231a.

The cylindrical portion 231a at one side portion of the collar portion 231b is inserted into the hole 19b of the rear link 19 and the one side portion of the collar portion 231b is welded to an edge of the through-hole 19b of the rear link 19.

Further, the cylindrical portion 231a at the other side portion of the collar portion 231b is inserted through the hole 23a of the lower arm 23. An outer peripheral surface of the part of the cylindrical portion 231a protruded from the hole 23a of the lower arm 23 is mounted with the push nut 55 that can contact an outer surface of the lower arm 23. Accordingly, since the lower arm 23 is sandwiched between the push nut 55 and the collar portion 231b of the bush 231, an axial movement of the bush 231 is restricted and the other side portion of the collar portion 231b and a peripheral part of the hole 23a of the lower arm 23 are in sliding contact with each other. Additionally, in the present embodiment, the bush 57 made of a low-friction material is disposed between an inner peripheral surface of the hole 23a of the lower arm 23 and an outer peripheral surface of the bush 31.

Next, as shown in FIG. 6, a bush 267 is attached to the through-hole 61b of the tilt link 61 and is configured by a cylindrical portion (shaft portion) 267a and a collar portion 267b. The cylindrical portion 267a is inserted into the through-hole 61b and both ends thereof are formed as an open face. The collar portion 267b is formed at an outer peripheral surface of the cylindrical portion 267a.

The cylindrical portion 267a at one side portion of the collar portion 267b is inserted into the hole 61b of the tilt link 61, and the one side portion of the collar portion 267b is welded to an edge of the through-hole 61b of the tilt link 61.

Further, the cylindrical portion 267a at the other side portion of the collar portion 267b is inserted through the hole 23c of the lower arm 23. An outer peripheral surface of the part of the cylindrical portion 267a protruded from the hole 23c of the lower arm 23 is mounted with the push nut 68 that can contact an outer surface of the lower arm 23. Accordingly, since the lower arm 23 is sandwiched between the push nut 68 and the collar portion 267b of the bush 267, an axial movement of the bush 267 is restricted and the other side portion of the collar portion 267b and a peripheral part of the hole 23c of the lower arm 23 are in sliding contact with each other. Additionally, in the present embodiment, the bush 71 made of a low-friction material is disposed between an inner peripheral surface of the hole 23c of the lower arm 23 and an outer peripheral surface of the bush 31.

According to the above configurations, in addition to the effects of the first embodiment, the following effects can be obtained.

(1) When a seat is raised and lowered, the collar portion 231b of the bush 231 and the collar portion 267b of the bush 267 are brought into sliding contact with the lower arm 23. Since the collar portion 231b of the bush 231 and the collar portion 267b of the bush 267 are formed by machining or the like (for example, cold forging), perpendicularity for the cylindrical portion 231a and the cylindrical portion 267a becomes good. Accordingly, when the seat is raised and lowered, the seat can be smoothly raised and lowered, generation of noise is suppressed and a lifting driving force is also reduced.

(2) Since the thickness of the collar portion 231b of the bush and the collar portion 267b of the bush 267 is changed, the amount of offset between the lower arm 23 and the rear link 19 and tilt link 61 can be easily changed.

In addition, although the holes into which the rod 53 and the rod 69 are inserted are through holes in the above-described embodiment, the holes may be blind holes having a sufficient depth.

### <Third Embodiment>

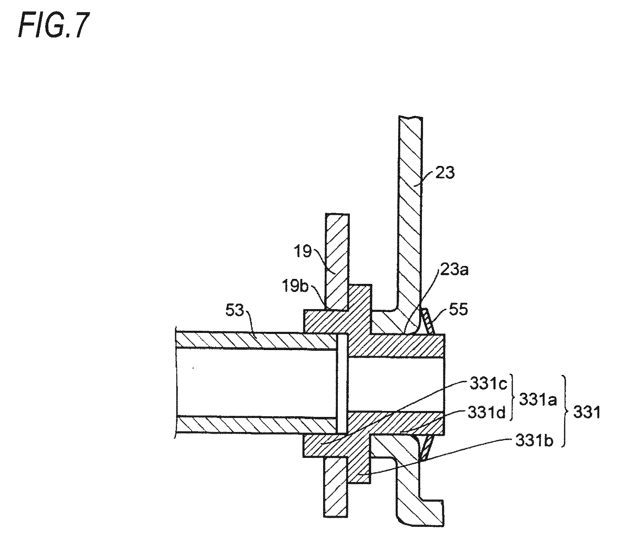

A third embodiment is described with reference to FIG. 7. FIG. 7 is a view explaining a bush of the third embodiment. The present embodiment is the same as the first and second embodiments except for the shape of the bush. Accordingly, the same or similar element will be denoted by the same reference numeral as that of the first and second embodiments and a duplicated description thereof will be omitted.

In FIG. 7, a bush 331 includes a cylindrical portion (shaft portion) 331a whose both ends are formed as an open face, and a collar portion 331b formed at an outer peripheral surface of the cylindrical portion 331a. Furthermore, the cylindrical portion 331a includes a large-diameter section 331c formed at one side with respect to the collar portion 331b and a small-diameter section 331d formed at the other side, which has a diameter smaller than the large-diameter section 331c.

The large-diameter section 331c of the cylindrical portion 331a of the bush 331 is inserted into the through-hole 19b of the rear link 19. Then, one side portion (side portion on the large-diameter section 331c side) of the collar portion 331b is welded to an edge of the through-hole 19b of the rear link 19.

Further, the small-diameter section 331d of the cylindrical portion 331a of the bush 331 is inserted through the hole 23a of the lower arm 23. An outer peripheral surface of the part of the small-diameter portion 31d protruded from the hole 23a of the lower arm 23 is mounted with the push nut 55 that can contact an outer surface of the lower arm 23. Accordingly, since the lower arm 23 is sandwiched between the push nut 55 and the collar portion 331b of the bush 331, an axial movement of the bush 231 is restricted, and the other side portion of the collar portion 231b and a peripheral part of the hole 23c of the lower arm 23 are in sliding contact with each other.

Meanwhile, although FIG. 7 is described with reference to the rear link 19, the same configurations may be applied to the tilt link 61.

According to the above configurations, since the part of the cylindrical portion 331a of the bush 331 that is rotatably held in the lower arm 23 is formed as the small-diameter section 331d, it is possible to reduce the hole 23a of the lower arm 23. Therefore, it is possible to achieve the miniaturization and strength-up of the lower arm 23.

In addition, although the holes into which the rod 53 and the rod 69 are inserted are through-holes in the above-described embodiment, the holes may be blind holes having a sufficient depth.

The present invention is not limited to the first to third embodiments and but can be practiced with various modifications within the spirit of the present invention and the scope described in the claims.

### Reference Numerals List

- 19: Rear Link
- 31, 67: Bush
- 31a, 67a, 119b, 161b: Shaft Portion
- 61: Tilt Link
- 119: Rear Link
- 61: Tilt Link
- 53, 69: Rod

## Claims

1. A seat lifter capable of changing height or inclination of an inner-side lower arm and outer-side lower arm of a seat cushion, the seat lifter comprising:
a first link member provided at one lower arm of an outer-side lower arm and an inner-side lower arm;
a second link member provided at an other lower arm of an inner-side lower arm and an outer-side lower arm; and
a rod having one end attached to a first link member and an other end attached to the second link member,
wherein at least one of the link members includes a shaft portion with a hole and is rotatably held in the lower arm on an outer peripheral surface of the shaft portion, and
wherein the rod is welded in a state of being inserted into the hole of the link member.

2. The seat lifter according to claim 1,
wherein the shaft portion is formed integrally with the link member.

3. The seat lifter according to claim 1,
wherein the link member comprises:
a link; and
a bush that is provided to the link and is configured by a cylindrical portion, both ends of which are formed as an open face and which serves as the shaft portion, and a collar portion, which is formed at an outer peripheral surface of the cylindrical portion and welded to an edge of a hole of the link.

4. The seat lifter according to claim 1,
wherein the shaft portion of the first link member is formed integrally with the first link member, and
wherein the second link member comprises:
a link; and
a bush that is provided in the link and is configured by a cylindrical portion, both ends of which are formed as an open face and which serves as the shaft portion, and a collar portion, which is formed at an outer peripheral surface of the cylindrical portion and welded to an edge of a hole of the link.

5. The seat lifter according to claim 1,
wherein the shaft portion of the first link member is formed integrally with the first link member, and
wherein the shaft portion of the second link member is formed integrally with the second link member

6. The seat lifter according to claim 3,
wherein the lower arm is brought into sliding contact with the side portion of the collar portion.

7. The seat lifter according to claim 3,
wherein a diameter of a part of the cylindrical portion of the bush that is rotatably held in the lower arm is different from a diameter of a part of the cylindrical portion of the bush to which the rod is inserted.
